# EUROPEAN PATENT APPLICATION

(11) **EP 3 767 160 A1**
(43) Date of publication of application: **20.01.2021**
(21) Application number: 18910027.4
(22) Date of filing: 28.06.2018
(51) Int. Cl.: F21S 10/04, F21V 14/00, F21Y 101/00

(54) **SIMULATED FLAME DEVICE USING MAGNETIC SUSPENSION, AND SIMULATED FLAME LAMP**

(30) Priority: 16.03.2018 CN 201810220664
(71) Applicant: Hu, Wei, Shenzhen, Guangdong 518000 (CN); Li, Chao, Shenzhen, Guangdong 518000 (CN)
(72) Inventor: Hu, Wei, Shenzhen, Guangdong 518000 (CN); Li, Chao, Shenzhen, Guangdong 518000 (CN)
(74) Representative: Meyer, Thorsten
(86) International application number: PCT/CN2018/093243
(87) International publication number: WO 2019/174154

(57) **Abstract**

A magnetic suspension simulated flame device includes a base (61), a flame component (62), a positioning bracket (63), a first magnet (64) and a second magnet (65). The positioning bracket (63) is fixed in the base (61); the first magnet (64) is disposed on the flame component (62), and the flame component (62) is disposed on the positioning bracket (63), such that the flame component (62) is exposed outside of the base (61); the second magnet (65) is fixed to the lower end of the positioning bracket (63), and the first magnet (64) and the second magnet (65) are disposed one above the other and the polarity of the poles facing one another are the same, such that the flame component (62) is suspended relative to the positioning bracket (63) under the repulsive force of the two magnets. The simulated flame device has the advantages of having large swing angles and natural and vivid swing. Further disclosed is a simulated flame lamp including the described simulated flame device.

## Description

### FIELD OF THE INVENTION

The present invention relates to an imitation flame device, and more particularly to a magnetic suspension imitation flame device and an imitation flame lamp having the same.

### BACKGROUND OF THE INVENTION

Currently, for creating ambience in certain occasions, people often use imitation candle lamps to imitate actual candle flame effect. A conventional imitation candle lamp commonly utilizes a flame sheet supported on the lamp head, an illuminator emitting light to the flame sheet, and a drive device for driving the flame sheet to swing, thereby obtaining faux flame effect. However, the flame sheet is supported on the lamp head by a wire, and the flame sheet may swing at small amplitude due to its swing is limited by the wire. Thus the imitation effect is stiff and not lifelike, which is not undesirable. In addition, the existing flame sheet is mounted on the lamp head by an iron wire, and frictional resistance is generated accordingly, thus the flame sheet can only swing once or twice by virtue of friction resistance when the flame sheet is driven once by a driving device. In order ensure the continuous swings of the flame sheet, it's necessary to drive the flame sheet by continuously energizing the driving device, which will certainly consume a lot of electric energy for the driving device, making the battery life of the imitation flame lamp short and not environmentally friendly.

### SUMMARY OF THE INVENTION

One objective of the present invention is to provide a magnetic suspension imitation flame device which has a large swing angle, natural swing action, and lifelike imitation effect, and saves electric energy.

Another objective of the present invention is to provide an imitation flame lamp which has a large swing angle, natural swing action, and lifelike imitation effect, and saves electric energy.

To achieve the mentioned above objectives, the present invention provides a magnetic suspension imitation flame device including a base, a flame component, a positioning bracket, a first magnet and a second magnet. The positioning bracket is fixed in the base, the first magnet is configured on the flame component which is configured on the positioning bracket, and the flame component is protruded from the base; the second magnet is fixed to a lower end of the positioning bracket, and the first magnet and the second magnet are arranged up and down respectively, and poles of the first magnet and the second magnet facing one another have same polarity, and the flame component is suspended relative to the positioning bracket under a repulsive force of the first and the second magnets.

In comparison with the prior art, the flame component of the present application is provided with the first magnet, the positioning bracket is provided with the positioning rod which inserts through the first magnet 64 and the flame component, so that the flame component is suspended on the positioning bracket. Further, the second magnet is fixed at the lower end of the positioning bracket, the pole of the second magnet and the pole of the first magnet facing each other have the same polarity, so that the flame component can be suspended under a repulsive force of the first and the second magnets. Based on the above arraignments, the flame component can swing in all directions with a large swing angle, without limitation by other forces in the suspended state, by this token, the swing action is more natural and lifelike, to improve the simulation effect. In addition, the swing action of the flame component is lasting due the inertial force, thereby effectively reducing the energy and power of the driving device, thereby saving power and extending battery life and protecting environment.

Preferably, either of the positioning bracket and the flame component is provided with a vertical positioning rod, the other of the positioning bracket and the flame component is provided with a positioning hole, and the positioning rod is inserted into the positioning hole.

Preferably, the flame component is provided with an elongated hole; and the positioning rod passes through and is protruded from the positioning hole.

Preferably, the positioning bracket is further provided with a supporting pillar configured at an upper end of the supporting pillar, and the second magnet is installed in an opening that is formed on a bottom surface of the supporting pillar.

Preferably, the flame component is provided with an elongated slot in which the supporting pillar is configured, and one end of the elongated slot is provided with a mounting hole for receiving the first magnet.

Preferably, the flame component comprises a flame sheet and a swinging part, the flame sheet is extended downwardly to form a connecting leg, and the swinging part is provided with a connection hole into which the connecting leg is inserted, so that the flame sheet is connected with the swinging part.

Accordingly, the present invention further provides an imitation flame lamp having a shell, and a power supply, a control circuit board, a driving device, and an illuminant respectively installed in the shell. The magnetic suspension imitation flame device mentioned above is included, the flame component is protruded from an upper end of the shell, the control circuit board is electrically connected to the power supply through a switch, and the illuminant is electrically connected to the control circuit board for emitting light towards the flame component, and the driving device is electrically connected with the control circuit board for driving the flame component to swing.

Preferably, the driving device comprises a third magnet and a coil, the third magnet is fixed to a lower end of the flame component, and the coil is located below the flame component for generating an electromagnetic field under the control of the control circuit board, so that the third magnet drives the flame component to swing under the action of the electromagnetic field.

Preferably, a lower bottom of the flame component is provided with a fixing hole for receiving the third magnet.

Preferably, the shell is in a candle shape.

### BRIEF DESCRIPTION OF THE DRAWINGS

The accompanying drawings facilitate an understanding of the various embodiments of this invention. In such drawings:
Fig. 1 is an exploded perspective view of an imitation flame lamp according to an embodiment of the present invention;
Fig. 2 is an interior schematic view of a magnetic suspension imitation flame device according to an embodiment of the present invention;
Fig. 3 is a sectional view of a magnetic suspension imitation flame device according to an embodiment of the present invention;
Fig. 4 is a front view of a magnetic suspension imitation flame device according to an embodiment of the present invention;
Fig. 5 is a schematic view of a positioning bracket of a magnetic suspension imitation flame device according to an embodiment of the present invention; and

Fig. 6 is a schematic view of a flame component of a magnetic suspension imitation flame device according to an embodiment of the present invention.

### DETAILED DESCRIPTION OF ILLUSTRATED EMBODIMENTS

The present invention will be described in detail below with reference to the accompanying drawings and preferred embodiments.

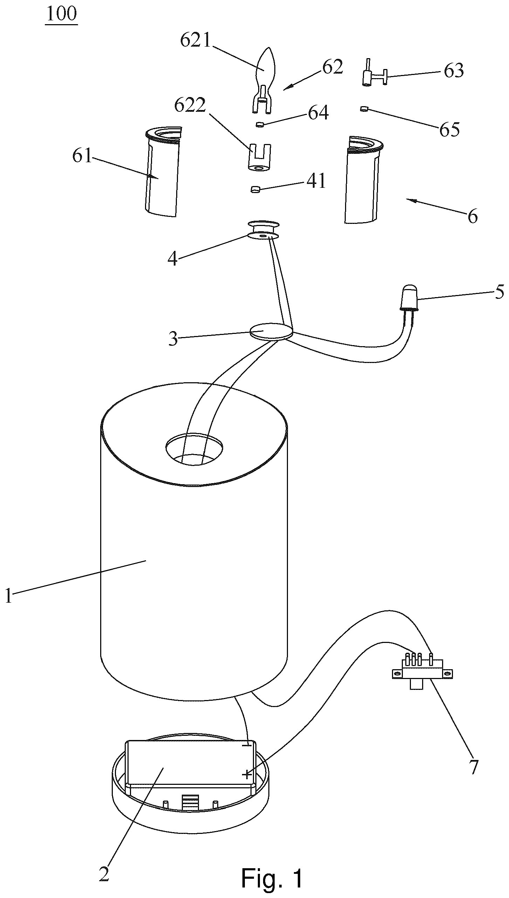

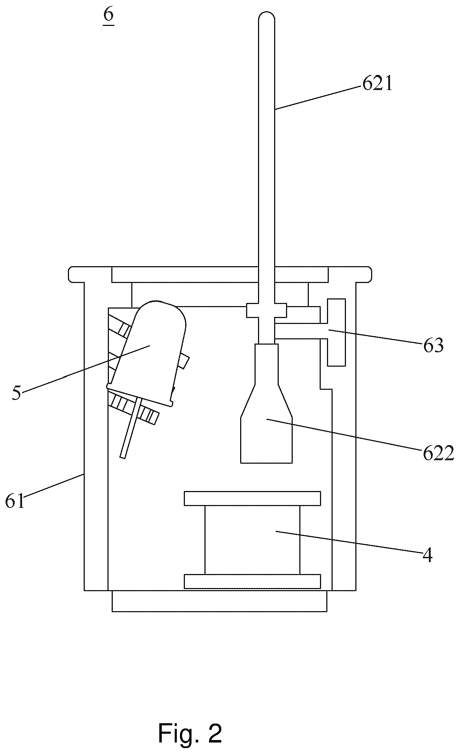

As illustrated in Figs. 1 and 2, an imitation flame lamp 100 of the present invention includes a shell 1, and a power supply 2, a control circuit board 3, a driving device 4, an illuminant 5 and a magnetic suspension imitation flame device 6 respectively installed in the shell 1. The control circuit board 3 is electrically connected to the power supply 2 through a switch 7, and the illuminant 5 is electrically connected to the control circuit board 3 for emitting light towards a flame component 62 of the magnetic suspension imitation flame device 6, and the driving device 4 is electrically connected with the control circuit board 3 for driving the flame component 62 to swing. In this embodiment, the shell 1 is in a candle shape, so as to improve the imitation effect of the imitation flame lamp 100.

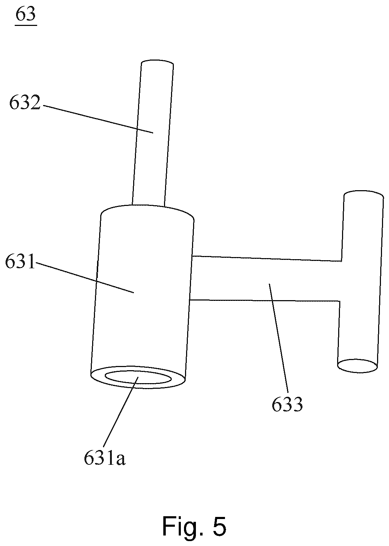

Referring again to Figs. 1, 3, 5 and 6, the magnetic suspension imitation flame device 6 includes a base 61, a flame component 62, a positioning bracket 63, a first magnet 64 and a second magnet 65. Specifically, the base 61 is formed by a left part and a right part. The positioning bracket 63 is fixed in the base 61, and the positioning bracket 63 has a vertical supporting pillar 631, a positioning rod 632 and a T-shaped connecting part 633 arranged transversely. More specifically, the positioning rod 632 is arranged at the upper end of the supporting pillar 631, one end of the connecting part 633 is connected to the supporting pillar 631, and the other end of the connecting part 633 is connected to the base 61. The first magnet 64 is arranged on the flame component 62, the middle of the first magnet 64 is provided with a positioning hole 641, and the flame component 62 is also provided with another positioning hole (not shown) that is aligned with the positioning hole 641 of the first magnet 64. The positioning rod 632 passes through the positioning hole 641 of the first magnet 64 and the positioning hole of the flame component 62, keeping a certain gap; in such a way, the flame component 62 is positioned, so that the flame sheet 621 of the flame component 62 is protruded from the base 61 and extended out of the upper end of the shell 1. The second magnet 65 is fixed in an opening 631a on the bottom surface of the supporting pillar 631, the poles of the second magnet 65 and the first magnet 64 that face one another have the same polarity, so that the flame component 62 can be suspended relative to the positioning bracket 63 under the action of the repulsive force of the two magnets. Other engagement manners between the flame component and the fixing bracket of the present invention also can be used, for example, the flame component may be provided with a positioning rod, and the positioning bracket may be provided with a positioning hole, as a result, the positioning rod is inserted into the positioning hole to fix the flame component, the first magnet is fixed at the lower end of the positioning rod and inserted into the positioning hole, under mutual repulsion with the second magnet. In such a way, the flame component can be suspended relative to the positioning bracket as well.

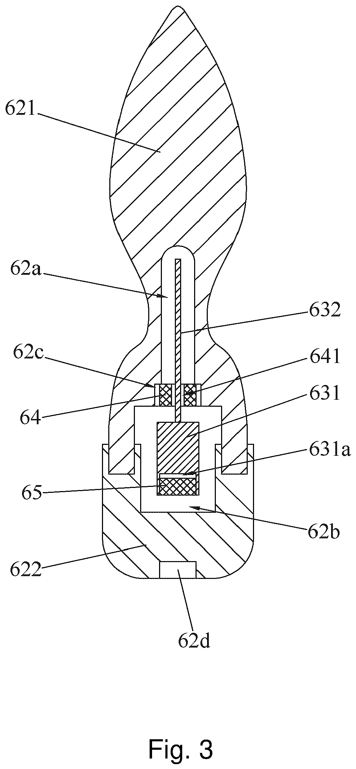

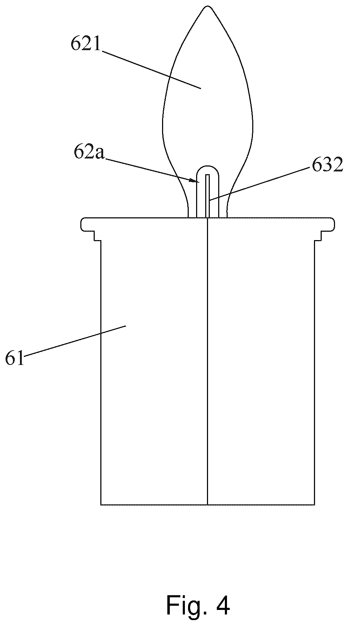

As shown in Figs. 3 and 4, the flame sheet 621 of the flame component 62 is provided with an elongated hole 62a, so that the positioning rod 632 passes through the positioning hole 641 and the elongated hole 62a, then is protruded from the elongated hole 62a, so that the positioning rod 632 can be seen from the front view of the flame sheet 621. Preferably, the positioning rod 632 may be painted black to simulate a flame wick. In such a way, the imitation effect is improved.

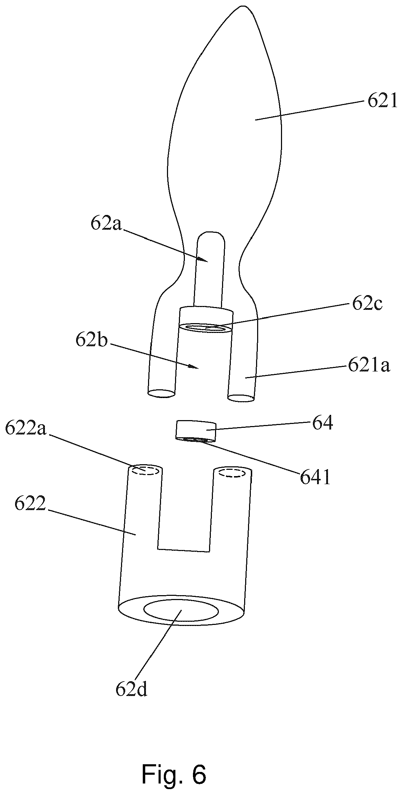

Referring to Fig. 6, the flame component 62 includes the flame sheet 621 and a swinging part 622, specifically, the flame sheet 62 is extended downwardly to form two connecting legs 621a, and the swinging part 622 is provided with a connection hole 622a into which the connecting legs 621a are inserted, so that the flame sheet 621 is connected with the swinging part 622. An elongated slot 62b is formed between the two connecting legs 621a, and one end of the elongated slot 62a is provided with a mounting hole 62c for receiving the first magnet 64, and the supporting pillar 631 is received into the elongated slot 62b, so as to suspend the flame component 62 relatively to the supporting pillar 631.

Referring to Fig. 1 again, the driving device 4 includes a third magnet 41 and a coil 42. Specifically, the third magnet 41 is fixed to a lower end of the flame component 62, and a fixing hole 62d is formed at the lower bottom of the flame component 62. Preferably, in this embodiment, the fixing hole 62d is formed on the bottom surface of the swinging part 622, and the third magnet 41 is received in the fixing hole 62d. The coil 42 is located below the flame component 62 for generating an electromagnetic field under the control of the control circuit board 3, so that the flame component 62 can be driven to swing by the third magnet 41 under the action of the electromagnetic field. Specifically, the control circuit board 3 is configured to control the operation of the coil 42. When the coil 42 is energized, the coil 42 generates an electric field, thereby pushing the third magnet 41 to move, and driving the flame component 62 to swing accordingly. Otherwise, when the coil 42 is de-energized, the flame component 62 continues to swing under the action of inertia; after a period during the swings, the coil 42 is energized again to generate an electric field again, thereby pushing the third magnet 41 to move again to swing the flame component 62, thereby ensuring a continuous swing of the flame component 62.

Compared with the prior art, the flame component 62 of the present application is provided with the first magnet 64, the positioning bracket 63 is provided with the positioning rod 632, and the positioning rod 632 inserts through the first magnet 64 and the flame component 62, so that the flame component 62 is suspended on the positioning bracket 63. Further, the second magnet 65 is fixed at the lower end of the positioning bracket 63, the pole of the second magnet 65 and the pole of the first magnet 64 facing each other have the same polarity, so that the flame component 62 can be suspended under a repulsive force of the first and the second magnets 64 and 65. Based on the above arraignments, the flame component 62 can swing in all directions with a large swing angle, without limitation by other forces in the suspended state, by this token, the swing action is more natural and lifelike, to improve the simulation effect. In addition, the swing action of the flame component 62 is lasting due the inertial force, thereby effectively reducing the energy and power of the driving device 4, thereby saving power and extending battery life and protecting environment.

The foregoing descriptions are only preferred examples of the present invention, which cannot be used to limit the scope of rights of this application. Therefore, any equivalent modifications and variations that may be apparent to those skilled in the art are intended to be included within the scope of this invention as defined by the accompanying claims.

## Claims

1. A magnetic suspension imitation flame device, comprising a base, a flame component, a positioning bracket, a first magnet and a second magnet, wherein the positioning bracket is fixed in the base, the first magnet is configured on the flame component which is configured on the positioning bracket, and the flame component is protruded from the base; the second magnet is fixed to a lower end of the positioning bracket, and the first magnet and the second magnet are arranged up and down respectively, and poles of the first magnet and the second magnet facing one another have same polarity, and the flame component is suspended relative to the positioning bracket under a repulsive force of the first and the second magnets.

2. The magnetic suspension imitation flame device according to claim 1, wherein either of the positioning bracket and the flame component is provided with a vertical positioning rod, the other of the positioning bracket and the flame component is provided with a positioning hole, and the positioning rod is inserted into the positioning hole.

3. The magnetic suspension imitation flame device according to claim 2, wherein the flame component is provided with an elongated hole; and the positioning rod passes through and is protruded from the positioning hole.

4. The magnetic suspension imitation flame device according to claim 2, wherein the positioning bracket is further provided with a supporting pillar configured at an upper end of the supporting pillar, and the second magnet is installed in an opening that is formed on a bottom surface of the supporting pillar.

5. The magnetic suspension imitation flame device according to claim 4, wherein the flame component is provided with an elongated slot in which the supporting pillar is configured, and one end of the elongated slot is provided with a mounting hole for receiving the first magnet.

6. The magnetic suspension imitation flame device according to any one of claims 1-5, wherein the flame component comprises a flame sheet and a swinging part, the flame sheet is extended downwardly to form a connecting leg, and the swinging part is provided with a connection hole into which the connecting leg is inserted, so that the flame sheet is connected with the swinging part.

7. An imitation flame lamp, comprising a shell, and a power supply, a control circuit board, a driving device, and an illuminant respectively installed in the shell, wherein the magnetic suspension imitation flame device according to any one of claims 1-6 is included, the flame component is protruded from an upper end of the shell, the control circuit board is electrically connected to the power supply through a switch, and the illuminant is electrically connected to the control circuit board for emitting light towards the flame component, and the driving device is electrically connected with the control circuit board for driving the flame component to swing.

8. The imitation flame lamp according to claim 7, wherein the driving device comprises a third magnet and a coil, the third magnet is fixed to a lower end of the flame component, and the coil is located below the flame component for generating an electromagnetic field under the control of the control circuit board, so that the third magnet drives the flame component to swing under the action of the electromagnetic field.

9. The imitation flame lamp according to claim 8, wherein a lower bottom of the flame component is provided with a fixing hole for receiving the third magnet.

10. The imitation flame lamp according to claim 7, wherein the shell is in a candle shape.
